# EUROPÄISCHE PATENTSCHRIFT

(11) **EP 1 141 574 B1**
(45) Veröffentlichungstag und Bekanntmachung des Hinweises auf die Patenterteilung: **04.06.2003**
(21) Anmeldenummer: 99966870.0
(22) Anmeldetag: 15.12.1999
(51) Int. Cl.: F16D 65/16

(54) **ELEKTROMECHANISCHE KRAFTFAHRZEUG-BREMSVORRICHTUNG**
ELECTROMECHANICAL BRAKE SYSTEM FOR MOTOR VEHICLES
SYSTEME DE FREINAGE ELECTROMECANIQUE D'UN VEHICULE

(30) Priorität: 18.12.1998 DE 19858764
(43) Veröffentlichungstag der Anmeldung: 10.10.2001
(73) Patentinhaber: SIEMENS AKTIENGESELLSCHAFT, 80333 München (DE)
(72) Erfinder: DÖRICHT, Michael, D-93138 Lappersdorf (DE); SCHMID, Rainer, D-93059 Regensburg (DE)
(86) Internationale Anmeldenummer: DE9903994
(87) Internationale Veröffentlichungsnummer: WO00037818

(56) Entgegenhaltungen:
- WO-A-99/02882
- DE-A- 19 508 253
- DE-A- 19 652 229
- DE-A- 19 652 230
- PATENT ABSTRACTS OF JAPAN vol. 1995, no. 09, 31. Oktober 1995 (1995-10-31) & JP 07 144636 A (AKEBONO BRAKE RES & DEV CENTER LTD), 6. Juni 1995 (1995-06-06)

## Beschreibung

Die Erfindung betrifft eine elektromechanische Kraftfahrzeug-Bremsvorrichtung gemäß Patentanspruch 1.

Durch die DE 195 08 253 A1 ist ein elektrisch betriebener Bremszusteller, insbesondere für Kraftfahrzeugbremsen, mit einem ersten Zustellerantrieb zur Überwindung großer Bremszustellwege und Übertragung leichter bis mittlerer Bremskräfte und einem zweiten Zustellerantrieb zur Übertragung hoher Bremskräfte bei kleinen Bremszustellwegen bekannt, wobei der erste Zustellerantrieb von einem mit hohem Drehmoment und niedriger Drehzahl arbeitenden Spindelantriebsmotor mit selbsthemmendem Spindelantrieb elektromotorisch und der zweite Zustellerantrieb piezoelektrisch oder magnetostriktiv betreibbar ist. Das Piezoelement und die Spindelmutter des Spindelantriebes sind innerhalb einer topfförmigen Hohlzylinder-Ausformung des Bremskolbens, der Elektromotor und seine Spindelankopplung jedoch außerhalb der Hohlzylinder-Ausformung dem Bremskolben axial vorgelagert.

In JP 0 7144636 A wird eine Bremsvorrichtung beschrieben, die ebenfalls ein Piezoelement aufweist zum Verstärken des Drehmoments gegen Ende des Bremsvorgangs. Der Bremskolben ist als Hohlzylinder ausgebildet, in dem das Piezoelement angeordnet ist. Die Anordnung des Elektromotors wird nicht näher erläutert.

DE 196 52 230 offenbart eine Bremsvorrichtung, bei der beim Bremsvorgang das gesamte Drehmoment mittels eines Elektromotors erzeugt wird. Der Elektromotor ist koaxial um den als Spindel ausgebildeten Bremskolben angeordnet. Der Elektromotor ist über ein Planetengetriebe mit einer Gewindemutter verbunden. Die Gewindemutter weist ein dem Elektromotor axial vorgelagertes Teil auf, das Teile des Planetengetriebes trägt.

Der Erfindung liegt das technische Problem zugrunde, eine elektrisch betätigte Bremsanlage zu schaffen, bei der eine Drehmitnahme des Elektromotors bei einer verschleißausgleichenden Längsbewegung des piezoelektrischen Elements verhindert werden kann.

Dieses Problem wird erfindungsgemäß durch eine Bremsvorrichtung gemäß Anspruch 1 gelöst. Zweckmäßige Weiterbildungen der Erfindung sind jeweils Gegenstand der Unteransprüche.

Durch das Vorsehen einer Kupplung zwischen einem Elektromotor und der Gewindemutter lässt sich der Elektromotor bei einer verschleißausgleichenden Bewegung des piezoelektrischen Elements vom piezoelektrischen Element entkoppeln, so dass sich der Elektromotor bei der Längsbewegung des piezoelektrischen Elements nicht mitdreht.

Die erfindungsgemäße konzentrische Anordnung von Piezo-Zustellelement einerseits und Elektromotor-Zustellelement andererseits erlauben eine axial kompakte, wegen geringer Biegebelastungen leichte und trotzdem betriebstüchtige Bremsvorrichtung.

Der Antrieb der Bremsen erfolgt nach einer vorteilhaften Ausgestaltung der Erfindung durch einen sehr kostengünstigen Elektromotor, welcher nur über einen Wicklungsstrang verfügt und keinerlei Kommutierungseinrichtungen benötigt.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen:
- FIG 1: eine schematische Darstellung einer erfindungsgemäßen Bremsanlage für ein Fahrzeug;
- FIG 2: eine Schnittzeichnung eines in der Bremsanlage gemäß FIG 1 verwendeten Radbremsaktors, der in einen Schwimmsattel integriert ist;
- FIG 3: ein Elektromotor des Radbremsaktors gemäß FIG 2 im Querschnitt;
- FIG 4: eine Diagrammdarstellung des durch Bremsbeläge des Radbremsaktors gemäß FIG 2 aus der Ruhestellung heraus zurückgelegten Weges in Abhängigkeit von der Zuspannkraft des Bremssattels;
- FIG 5: eine Diagrammdarstellung der von einem piezoelektrischen Element erzeugten Kraft in Abhängigkeit von der an das piezoelektrische Element angelegten elektrischen Spannung, und
- FIG 6: die Steuerung des Radbremsaktors gemäß FIG 2 als Blockschaltbild.

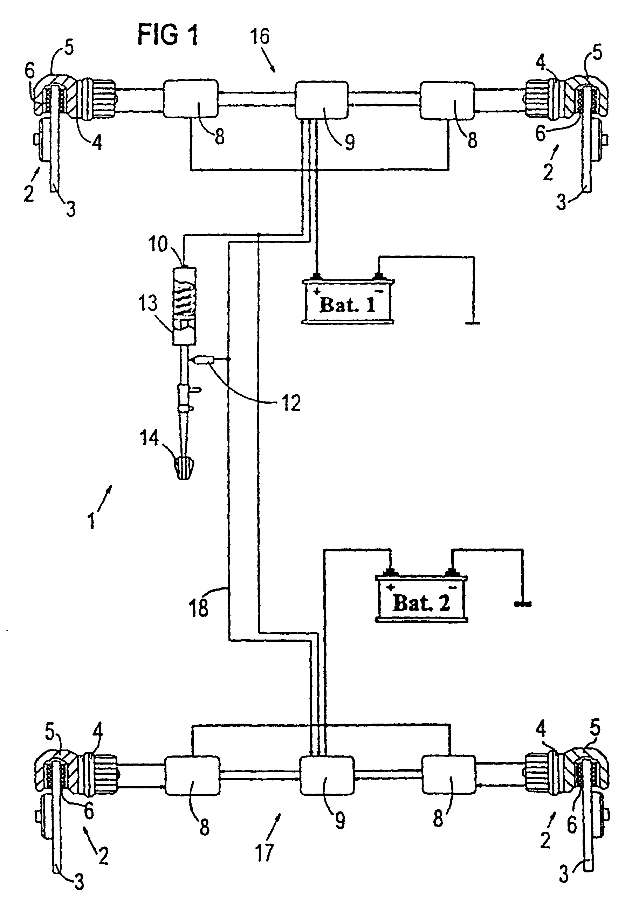

FIG 1 zeigt den schematischen Aufbau einer Bremsanlage 1 für ein Kraftfahrzeug mit vier Rädern und dementsprechend vier Bremsen 2, die je eine Bremsscheibe 3 und eine Betätigungsvorrichtung in Gestalt eines Radbremsaktors 4 einschließen. Die Radbremsaktoren 4 sind in je einen zugehörigen Bremssattel 5 in Form eines Schwimmsattels integriert und derart zu einer Baueinheit zusammengefaßt. Über Bremsbeläge 6 wird bei Betätigung des Radbremsaktors 4 ein Bremsmoment auf die Bremsscheibe 3 ausgeübt.

Jeder Radbremsaktor 4 verfügt über eine Leistungs- und Steuerelektronik 8, die von einem zugehörigen Steuergerät 9 mit Steuersignalen, zum Beispiel für das Sollmoment eines noch zu beschreibenden Radbremsaktormotors, versorgt wird und die an das Steuergerät 9 Rückmeldegrößen, zum Beispiel über das Istmoment des Aktormotors, übermittelt.

Die Leistung- und Steuerelektronik 8 erhält von dem Radbremsaktor 4 ebenfalls Rückmeldegrößen, zum Beispiel über die Motordrehzahl, den Motordrehwinkel und/oder über die Anpreßkraft der Bremsbeläge. Die Sollgrößen für jeden Radbremsaktor werden von dem Steuergerät 9 aus Meßgrößen ermittelt, die von verschiedenen Sensoren geliefert werden, zum Beispiel einem Kraftsensor 10 und einem Wegsensor 12, mit denen ein Pedalkraftsimulator 13 versehen ist, der durch das Bremspedal 14 des Kraftfahrzeugs betätigt wird. Der Pedalkraftsimulator 13 setzt die Bewegung des Bremspedals 14, d.h. die von dem Fahrer wie gewohnt ausgeübte Kraft, und den Pedalweg in elektrische Signale um, die dem Steuergerät 9 zugeführt werden und Sollwerte für die Bremsen 2, insbesondere für die Fahrzeugverzögerung und das auf die Bremsscheiben aufzubringende Dreh- oder Bremsmoment darstellen. Zum Berechnen der Sollwerte bei einem Eingriff von Antiblockier- oder Fahrstabilitätsregelungen werden von dem Steuergerät 9 weitere Sensorsignale, zum Beispiel über die Querbeschleunigung oder die Gierwinkelgeschwindigkeit und der Raddrehzahlen, ausgewertet.

Die aus FIG 1 ersichtliche Bremsanlage 1 weist weiterhin zwei Bremskreise 16 und 17 auf, die auf die Vorderachse und die Hinterachse des Kraftfahrzeuges aufgeteilt sind. Eine alternativ mögliche Diagonalbremskreisaufteilung unterscheidet sich hiervon nur durch eine veränderte Zuordnung der Radbremseinheiten zu den Steuergeräten und Energieversorgungen. Jeder Bremskreis 16, 17 verfügt über ein eigenes Steuergerät 9 und eine eigene Energieversorgung in Form je einer Batterie Bat. 1 bzw. Bat. 2. Die Energieversorgungen und die Steuereinheiten können dabei jeweils in einem Gehäuse untergebracht werden, müssen dann aber funktionell voneinander getrennt sein.

Versorgungsleitungen sind in der FIG 1 stark liniert eingezeichnet und nicht mit Pfeilen versehen, Steuerleitungen sind schwach liniert eingezeichnet und mit Pfeilen entsprechend ihrer jeweiligen Signalflussrichtung versehen.

Die beiden unabhängig voneinander arbeitenden Steuergeräte 9 können über eine bidirektionale Signalleitung miteinander kommunizieren und dadurch den Ausfall eines Bremskreises 16 oder 17 in dem jeweils anderen Bremskreis erkennen und ggf. geeignete Notmaßnahmen ergreifen. Die Bremsanlage kann auch um ein drittes - hier nicht dargestelltes - Steuergerät, das als Supervisor die beiden Bremskreis-Steuergeräte überwacht, ergänzt werden.

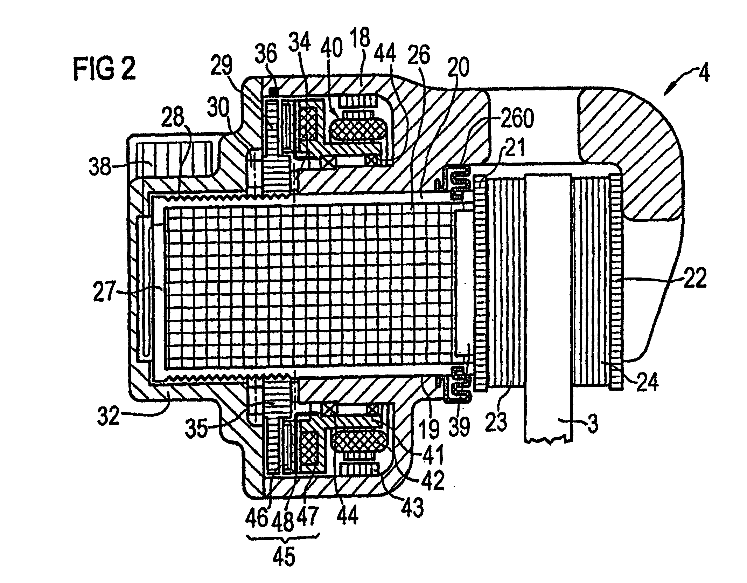

Gemäß FIG 2 ist der Radbremsaktor 4 direkt an einem Bremssattelgehäuse 18 and mit diesem einstückig ausgebildet. Das Bremssattelgehäuse 18 weist eine zylindrische Bohrung 19 auf, in der ein verschiebbarer Bremskolben 20 geführt wird. Der Bremskolben 20 drückt auf einen plattenförmigen Bremsbelagträger 21 eines inneren Bremsbelages 23, und aufgrund der schwimmenden Lagerung des Bremssattels wirkt die gleiche Kraft auf einen äußeren Bremsbelag 24; die Bremsbeläge 23;24 werden in an sich bekannter Weise an die Bremsscheibe 3 angepresst und erzeugen aufgrund der Reibung zwischen den Bremsbelägen 23 und 24 und der Bremsscheibe 3 ein Bremsmoment, welches sich über einen hier nicht dargestellten Halter an dem Kraftfahrzeug abstützt und zur Abbremsung führt. bekannt und braucht daher hier nicht weiter erläutert werden. Eine balgförmige Staubschutzdichtung 260 verhindert das Eindringen von Schmutz, Feuchtigkeit und Belagabrieb in die zylindrische Bohrung 19.

Die Kraft auf den inneren Bremsbelag wird wie folgt aufgebracht:
Der Bremskolben 20 ist als Hohlzylinder ausgebildet, in dessen inneren Hohlraum ein piezoelektrisches Element 26 eingebracht ist. Piezoelektrische Elemente verändern bekanntlich ihre Länge in Abhängigkeit von der angelegten elektrischen Spannung. Das piezoelektrische Element 26 ist dementsprechend im Sinne einer Längenänderung in Längsrichtung des Bremskolbens 20 an eine - hier nicht dargestellte - elektrische Spannungsquelle anschließbar; dabei stützt sich das piezoelektrische Element 26 auf seiner einen Seite an dem Topfboden 27 des topfförmig ausgebildeten, bremsscheibenseitig offenen Bremskolbens 20 und auf seiner anderen Seite an dem inneren Bremsbelagträger 22 ab. Auf einem Teilstück der äußeren Mantelfläche des Bremskolbens 20 ist ein Gewinde 28 vorgesehen, das mit einer Gewindemutter 29 in Eingriff ist. Die Gewindemutter 29 wird einerseits geführt durch ein Axialhauptlager 30 - gemäß Ausführungsbeispiel in einem Axial-Zylinderrollenlager -, das sich an einem deckelförmigen Gehäuseboden 32, der mit dem Bremssattelgehäuse 18 fest verbunden ist, abstützt. Andererseits wird die Gewindemutter 29 durch ein Axialnebenlager 34 - gemäß Ausführungsbeispiel in einem Axial-Zylinderrollenlager -, das sich an dem Sattelgehäuse 18 abstützt, geführt.

Die Gewindemutter 29 besitzt an ihrem Außenrand eine Verzahnung 35, die als Impulsgeber für einen Drehwinkelsensor 36 - z.B. in Form eines Hallsensors bzw. eines optischen oder induktiven Sensors - dient. Die so erfaßte Information über einen Drehwinkel, um den sich die Gewindemutter 29 gedreht hat, wird einer Steuer- und Leistungselektronik 38, die an den Gehäusedeckel 32 angebaut ist, zugeführt. Am bremsbelagseitigen Ende des piezoelektrischen Elements 26 befindet sich zwischen diesem und dem Bremsbelagträger 22 ein Kraftsensor 39, der die von dem piezoelektrischen Element 26 auf den Bremsbelagträger 22 ausgeübte Kraft mißt und diese Information an die Steuer- und Leistungselektronik 38 weitergibt.

Die Gewindemutter 29 wird von einem Elektromotor 40 in Drehbewegung versetzt. Der Elektromotor 40 - im Ausführungsbeispiel ein kommutatorloser Gleichstrommotor mit Permanentmagneterregung -, weist einen Läufer 41 auf, der als Hohlwelle ausgebildet ist, auf welcher die Wicklungen 42 des Elektromotors angeordnet sind, die ihrerseits von statorseitigen Permanentmagneten 43 umschlossen sind. Der Läufer 41 stützt sich über zwei Lager 44 an dem Bremssattelgehäuse 18 ab.

Mit dem Läufer 41 fest verbunden ist eine elektromagnetisch betätigte Kupplung 45 - im Ausführungsbeispiel als elektromagnetisch betätigte schleifringlose Einflächenkupplung ausgeführt -, deren Reibbelag 46 beim Bestromen eines Elektromagneten 47 durch eine Membranfeder 48 gegen die Gewindemutter 29 gedrückt und mit ihr reibschlüssig verbunden wird. Dadurch wird einerseits betriebsmäßig die Drehbewegung des Läufers 41 auf die Gewindemutter 29 übertragen und durch die Gewindepaarung zwischen Gewindemutter 29 und Gewinde 28 des Bremskolbens 20 in eine Längsbewegung des Bremskolbens umgesetzt und ist es andererseits in vorteilhafter Weise möglich, den Elektromotor 40 von der, gegebenenfalls sich über einen größeren Drehwinkel erstreckenden, Drehmitnahme bei einer verschleißausgleichenden Längsbewegung des piezoelektrischen Elementes 26 in Richtung auf die Bremsscheibe 3 zu entkoppeln.

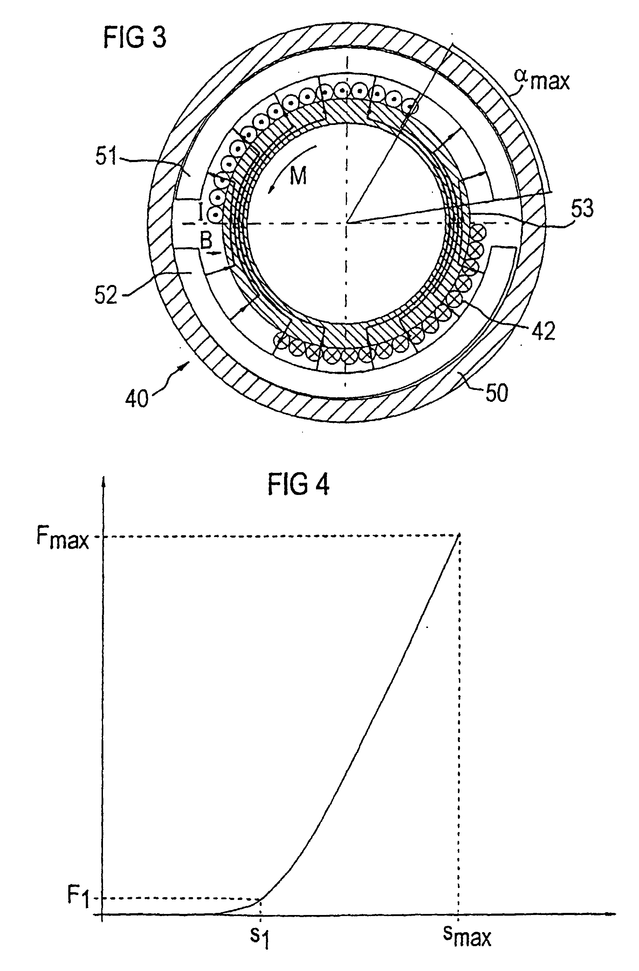

Aus FIG 3 ist in einer schematischen Schnittansicht senkrecht zu seiner Mittelachse der prinzipielle Aufbau des Elektromotors 40 ersichtlich. In einem zylindrischen Gehäuse 50 befinden sich - entsprechend den Statormagneten 43 in FIG 2 -zwei schalenförmige Permanentmagnete 51, 52; konzentrisch zwischen diesen befindet sich ein als Hohlwelle ausgebildeter Rotor 53, der sich über Rotorlager 44 (siehe FIG 2) an dem Sattelgehäuse abstützt, wobei Lager und Bremssattelgehäuse der Übersicht halber in der FIG 3 nicht dargestellt sind. Auf dem Rotor 53 befindet sich eine Wicklung 42, die sich jedoch nicht über dessen ganzen Umfang erstreckt und zwei Umfangsbereiche mit einem Winkel αₘₐₓ nicht überdeckt. Wird die Wicklung 42 von einem Gleichstrom **I** durchflossen, so ergibt sich ein Drehmoment von M = 2_{*}B_{*}**I**_{*}n_{*}d, wenn B die magnetische Flußdichte am Ort der Wicklung, n die Anzahl der Wicklungsschleifen und d die elektromagnetisch wirksame Länge des Läufers darstellt.

Das Drehmoment M wird über die Magnetkupplung 45 auf die Gewindemutter 29 übertragen und dort mittels der Gewindepaarung zwischen der Gewindemutter 29 und dem Gewinde 28 des Bremskolbens 20 in eine Längskraft Fₐₓ = **η** _{*****}**M**_{*****}**2**_{*****}**π**/p umgewandelt, wobei p die Steigung der Gewindepaarung 28, 29 angibt und η deren Wirkungsgrad.

Unter dem Einfluß der Kraft Fₐₓ bewegt sich der Bremskolben 20 mit dem piezoelektrischen Element 26 so lange in Richtung der Bremsscheibe 3, bis ein Kräftegleichgewicht zwischen Fₐₓ und der Reaktionskraft des Bremssattels 5 erreicht wird. Der Läufer 53 des Elektromotors 40 hat sich dann um einen Winkel α gedreht.

Aus Figur 4 wird der Zusammenhang zwischen der Zuspannkraft F des Bremssattels 5 und dem Weg s, den der Bremskolben 20 beim Zuspannen der Bremse 2 zurücklegt, ersichtlich. Es ist deutlich zu erkennen, daß ein großer Anteil s₁ (bei üblichen Schwimmsätteln etwa zwischen 30 % und 50 %) des zum Erreichen der maximalen Zuspannkraft Fₘₐₓ notwendigen Weges Sₘₐₓ in die Überwindung des Lüftspiels zwischen Bremsscheibe und Bremsbelägen und bis zum Erreichen der verhältnismäßig kleinen Kraft F₁, mit der alle Lose in der Mechanik und den Bremsbelägen und Belagführungen überwunden werden, nahezu kraftlos oder bei sehr geringen Kräften zurückgelegt wird. Erst danach beginnt ein großer Kraftaufbau bei kleinen Wegänderungen.

Der gesamte Zustellantrieb der Bremse setzt sich also - wie z.B. aus der DE 195 08 253 A1 bekannt - aus einem ersten elektromotorischen Antrieb zur Überwindung großer Bremszustellwege und Übertragung leicherer Bremskräte und einem zweiten piezoelektrischen Antrieb zur Überwindung kleinerer Bremszustellwege jedoch höherer Bremskräfte zusammen.

Der Elektromotor 40 wird mit dem Strom I bestromt und entwikkelt dabei das Drehmoment M wie oben beschrieben. Dieses Drehmoment wird durch die Magnetkupplung 45 auf die Gewindemutter 29 übertragen. Dadurch bewegt sich der Bremskolben 20 bis zum Weg s₁, bei dem die Zuspannkraft F₁ beträgt. An diesem Punkt halten sich die Reaktionskräfte des Bremssattels und die Axialkraft des Bremskolbens die Waage, ebenso herrscht am Elektromotor Momentengleichgewicht.

Unter Einfluß der Kraft Fₐₓ bewegt sich der Bremskolben 20 mit dem piezoelektrischen Element 26, solange in Richtung der Bremsscheibe 3, bis ein Kräftegleichgewicht zwischen Fₐₓ und der Reaktionskraft des Bremssattels gegeben ist. Der Läufer des Elektromotors hat sich dann um einen Winkel α gedreht.

Da die nutzbare Längenänderung von piezoelektrischen Elementen sehr begrenzt ist - sie liegt im Bereich von Zehntelmillimetern -, dabei aber sehr hohe Kräfte erzeugt werden, erfolgt die Zuspannung der Bremse 2 mit einer Kombination eines Antriebs durch den Elektromotor 40 und eines anschließenden Antriebs durch das piezoelektrische Element 26.

Der Elektromotor 40 wird mit dem Strom I bestromt und entwikkelt dabei wie oben beschrieben das Drehmoment M. Dieses Drehmoment wird durch die Kupplung 45 auf die Gewindemutter 29 übertragen. Dadurch bewegt sich der Bremskolben 20 bis zu dem Weg s₁, bei dem die Zuspannkraft den Wert F₁ beträgt. An diesem Punkt halten sich die Reaktionskräfte des Bremssattels 5 und die Axialkraft des Bremskolbens 20 die Waage, ebenso herrscht am Elektromotor 40 ein Momentengleichgewicht, so daß sich der Läufer nicht mehr weiter dreht und somit nach der Drehung um den Winkel α stehen bleibt. Hierbei wird die Gewindesteigung so gewählt, daß bei dem Winkel α gerade der Weg s₁ zurückgelegt wird. Da der Elektromotor 40 sich nur um einen Bruchteil einer ganzen Umdrehung dreht, kann auf jegliche Kommutierungseinrichtung verzichtet werden. Statt dessen wird eine flexible Zuleitung entsprechender Länge vorgesehen. Weil die von dem Elektromotor aufzubringende Kraft F₁ im Verhältnis zu der Kraft Fₘₐₓ sehr gering ist - beispielsweise im Bereich um einige hundert Newton - ist auch das erforderliche Drehmoment des Elektromotors 40 gering.

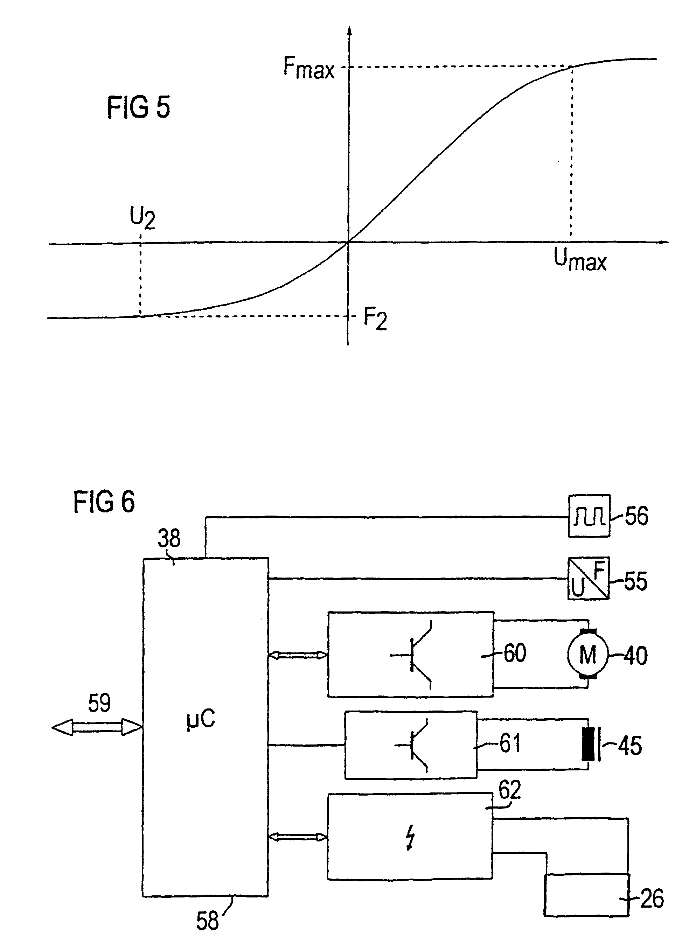

Der Elektromotor kann also kostengünstig und gewichtssparend ausgelegt werden. Da außerdem nur ein Wicklungsstrang vorhanden ist, kann die elektronische Steuerschaltung für den Elektromotor sehr einfach ausgeführt werden. Nach Erreichen der Kraft F₁ wird eine elektrische Spannung an das piezoelektrische Element 26 angelegt, das sich daraufhin in Längsrichtung ausdehnt und den weiteren Kraftaufbau übernimmt (siehe auch FIG 5). Bei einer Spannung Uₘₐₓ wird dann die maximale Zuspannkraft Fₘₐₓ erreicht. Damit der Elektromotor 40 durch die Reaktionskraft des Bremssattels nicht zurückgedreht wird, muß die Gewindepaarung zwischen dem Gewinde 28 des Bremskolbens 20 und der Gewindemutter 29 selbsthemmend ausgeführt werden. Dann wird die Gewindemutter 29 durch die wachsende Axialkraft arretiert, und der Elektromotor 40 kann sogar stromlos geschaltet werden, weil das Drehmoment nicht mehr aufrecht erhalten werden muss. Dies wirkt sich sehr günstig aus auf die Eigenerwärmung durch ohmsche Verluste in der Wicklung 42 und in der Steuerschaltung 38 und senkt außerdem den Energiebedarf des Radbremsaktors 4.

Für Bremsungen mit Eingriff eines Antiblockiersystems liegen die Zuspannkräfte durchweg über der Kraft F₁, so dass die dabei notwendigen schnellen Kraftänderungen allein mit dem dynamisch sehr flinken piezoelektrischen Element 26 realisiert werden, und keine weiteren mechanischen Teile mehr bewegt werden müssen.

Aus FIG 6 ist ein Blockschaltbild der Steuerung des Radbremsaktors 4 ersichtlich. Die Signale eines Kraftsensors 55 und eines Sensors 56 zum Erfassen des Drehwinkels der Gewindemutter 29 werden einer Steuereinheit 58, die vorzugsweise als Mikrorechnerschaltung µC ausgeführt ist, zugeführt. Diese Steuereinheit erhält von dem übergeordneten Steuergerät 9 (siehe Figur 1) über Steuerleitungen 59 Stellbefehle oder Sollwerte für die Bremskraft. Aus diesen Sollwerten und den Istwerten der Sensoren 55, 56 werden Stellbefehle für einen ersten Stromsteller 60 zum Betrieb des Elektromotors 40, einen zweiten Stromsteller 61 zum Betrieb der Magnetkupplung und einen Spannungssteller 62 zum Erzeugen der Spannung für das piezoelektrische Element 26 abgeleitet. Derartige Schaltungen sind allgemein bekannt - beispielsweise eine H-Brückenschaltung zum Betrieb des Elektromotors in beiden Drehrichtungen, Kaskadenschaltungen und DC-DC-Wandler für die Spannungsversorgung des Piezoelements und einfache Schalttransistoren zum Ein- und Ausschalten der Kupplung 45, sie werden deshalb hier nicht weiter erläutert.

## Patentansprüche

1. Elektromechanische Kraftfahrzeug-Bremsvorrichtung enthaltend:
- eine von einem Bremspedal (14) über elektrische Leitungen gesteuerte Betätigungsvorrichtung, die als eine an einem Bremssattel (5) eines jeden Rades des Kraftfahrzeuges montierter elektromechanischer Radbremsaktor (4) ausgebildet ist,
- als Teil des Radbremsaktors (4) jeweils einen Bremskolben (20), der bei einer Bremsbetätigung zunächst mit einer unter einem vorgebbaren Wert (F1) liegenden Zuspannkraft durch einen Elektromotor (40) und anschließend nach Erreichen des vorgebbaren Wertes (F1) mit einer über diesem Wert liegenden Zuspannkraft durch ein piezoelektrisches Element(26) axial verschiebbar and gegen einen Bremsbelag (23;25) andrückbar ist,
- eine Ausbildung des Bremskolbens (20) als Hohlzylinder und Anordnung des piezoelektrischen Elementes (26) innerhalb des Hohlzylinders, **gekennzeichnet durch**
- eine konzentrische Umschließung des Bremskolbens (20) im Bereich des piezoelektrischen Elementes (26) **durch** den Elektromotor (40),
- eine Ausbildung des Bremskolbens (20) mit einem Gewinde (28) an seinem Außenumfang, das mit einer dem Elektromotor (40) axial vorgelagerten Gewindemutter (29) im Eingriff steht, derart dass eine **durch** den Elektromotor (40) erzeugte Drehbewegung der Gewindemutter (29) in eine Axialbewegung des Bremskolbens (20) in Richtung auf die auf je einer Belagträgerplatte (21, 22) befestigten Bremsbeläge (23, 24) umgesetzt wird,
- eine elektromagnetisch betätigbare Kupplung (45) zwischen dem Elektromotor (40) und der Gewindemutter (29).

2. Elektromechanische Kraftfahrzeug-Bremsvorrichtung nach Anspruch 1 enthaltend:
- eine topfförmige Ausbildung des Bremskolbens (20) mit bremsscheibenseitiger Öffnung.

3. Elektromechanische Kraftfahrzeug-Bremsvorrichtung nach einem der Ansprüche 1 bis 2 enthaltend:
- eine Verzahnung (35) am Außenumfang der Gewindemutter (29) und einen der Verzahnung (35) zugeordneten Drehwinkelsensor (36) an einem Bremssattelgehäuse (18).

4. Elektromechanische Kraftfahrzeug-Bremsvorrichtung nach einem der vorhergehenden Ansprüche enthaltend:
- einen Kraftsensor (39) zwischen dem bremsbelagseitigen Ende des piezoelektrischen Elements (26) und dem nächstliegenden Bremsbelagträger (21).

5. Elektromechanische Kraftfahrzeug-Bremsvorrichtung nach einem der Ansprüche 1-4 enthaltend:
- eine Ausbildung des Elektromotors (40) mit einer nur über Teilumfangsbereiche sich erstreckenden, vorzugsweise einsträngigen, Wicklung (42) mit entsprechendem Winkel (α) einer Teilumfangsdrehung.

6. Elektromechanische Kraftfahrzeug-Bremsvorrichtung nach Anspruch 5 enthaltend:
- eine Erstreckung der Wicklung (42) über einen Teilumfangsbereich des Rotors des Elektromotors (40).

7. Elektromechanische Kraftfahrzeug-Bremsvorrichtung nach Anspruch 6 enthaltend:
- eine kollektorlose Speisung der Wicklung (42) des Rotors über eine flexible Zuleitung.

8. Elektromechanische Kraftfahrzeug-Bremsvorrichtung nach einem der Ansprüche 1 bis 7 enthaltend:
- eine statorseitige Erregung des Elektromotors (40) durch Permanentmagnete (51;52).

## Claims

1. Electromechanical vehicle brake device containing:
- an actuating device controlled via electric lines from a brake pedal (14), that is designed as an electromechanical wheel brake actuator (4) on a brake calliper (5) of each wheel of the vehicle,
- as part of the wheel brake actuator (4), a brake piston (20) in each case which, when the brakes are actuated, can be axially displaced first by an electric motor (40) with a clamping force below the preset value (F1) and then, after reaching the preset value (F1) by a piezoelectric element (26) at a clamping force above this value, and can be pressed against a brake pad (23; 25),
- a design of the brake piston (20) as a hollow cylinder and arrangement of the piezoelectric element (26) within the hollow cylinder, **characterised by**:
- a concentric enclosure of the brake piston (20) in the area of the piezoelectric element (26) by the electric motor (40),
- a design of the brake piston (20) with a thread (28) on its outer circumference, that is engaged with a threaded nut (29) axially positioned before the electric motor (40) such that a rotary motion of the threaded nut (29) generated by the electric motor (40) is converted into an axial movement of the brake piston (20) in the direction of the brake pads (23, 24), each of which is secured to a pad carrier plate (21, 22),
- an electromagnetically actuatable clutch (45) between the electric motor (40) and the threaded nut (29).

2. Electromechanical vehicle brake device according to Claim 1, containing:
- a cup-shaped design of the brake piston (20) with an opening at the brake disk end.

3. Electromechanical vehicle brake device according to one of Claims 1 to 2, containing:
- teeth (35) on the outer circumference of the threaded nut (29) and, assigned to the teeth (35), an angle-of-rotation sensor (36) on a brake calliper housing (18).

4. Electromechanical vehicle brake device according to one of the preceding claims, containing:
- a force sensor (39) between the brake pad end of the piezoelectric element (26) and the nearest brake pad carrier (21).

5. Electromechanical vehicle brake device according to one of Claims 1-4, containing:
- a design of the electric motor (40) with a winding (42), preferably single phase, extending over only parts of the circumferential area, with a partial circumferential rotation corresponding to angle (α).

6. Electromechanical vehicle brake device according to Claim 5, containing:
- an extension of the winding (42) over a part circumferential area of the rotor of the electric motor (40).

7. Electromechanical vehicle brake device according to Claim 6, containing:
- a brushless supply of the winding (42) of the rotor via a flexible supply line.

8. Electromechanical vehicle brake device according to one of Claims 1 to 7, containing:
- an electric motor (40) with excitation at the stator end by permanent magnets (51; 52).

## Revendications

1. Dispositif de freinage électromécanique de véhicule automobile comportant
- pour chaque roue du véhicule automobile, un dispositif d'actionnement qui est commandé par une pédale de frein (14) par l'intermédiaire de lignes électriques et qui est réalisée sous forme d'un actionneur de frein de roue électromécanique (4) monté sur un étrier de frein (5) de la roue respective du véhicule automobile,
- pour chaque actionneur de frein de roue (4) et constituant une partie de l'actionneur, un piston de frein (20) respectif qui, lors d'un actionnement du frein peut être déplacé en translation axiale et en appui sur une garniture de frein (23 ; 25) tout d'abord, par un moteur électrique (40), avec une force de serrage se trouvant au-dessous d'une valeur (F₁) qui peut être préfixée, puis, une fois atteinte la valeur (F₁) pouvant être préfixée, par un élément piézoélectrique (26) avec une force de serrage se trouvant au-dessus de cette valeur,
- une réalisation du piston de frein (20) sous forme d'un cylindre creux et un agencement de l'élément piézoélectrique (26) à l'intérieur du cylindre creux, **caractérisé en ce que**
- dans la zone de l'élément piézoélectrique (26), le piston de frein (20) est entouré dune manière concentrique par le moteur électrique (40),
- le piston de frein (20) est réalisé, sur son contour périphérique extérieur, avec un filetage (28) qui engrène avec un écrou fileté (29) monté axialement en avant vis-à-vis du moteur électrique (40), d'une manière telle qu'un mouvement de rotation de l'écrou fileté (29) produit au moyen du moteur électrique (40) est transformé en un mouvement axial du piston de frein (20) en direction de la garniture de frein (23, 24) fixée respectivement sur une plaquette de support de garniture (21, 22), et
- un embrayage à commande électromagnétique (45) est situé entre le moteur électrique (40) et l'écrou fileté (29).

2. Dispositif de freinage électromécanique pour véhicule automobile suivant la revendication 1 comportant:
- une réalisation en forme de gobelet du piston de frein (20) présentant une ouverture du côté du disque de frein.

3. Dispositif de freinage électromécanique pour véhicule automobile suivant l'une des revendications 1 à 2 comportant:
- une denture (35) sur le contour périphérique extérieur de l'écrou fileté (29) et un capteur d'angle de rotation (36), associé à la denture (35), sur un boîtier d'étrier de frein (18).

4. Dispositif de freinage électromécanique pour véhicule automobile suivant l'une des revendications précédentes comportant :
- un capteur de force (39) entre l'extrémité de l'élément piézoélectrique (26) qui est située du côté garniture de frein et le support de garniture de frein (21) le plus proche.

5. Dispositif de freinage électromécanique pour véhicule automobile suivant l'une des revendications 1 à 4 comportant:
- une réalisation du moteur électrique (40) avec un enroulement (42), de préférence à faisceau unique, qui ne s'étend que sur des zones périphériques partielles, avec un angle (a) correspondant dune rotation circonférentielfe partielle.

6. Dispositif de freinage électromécanique pour véhicufe automobile suivant la revendication 5, comportant :
- le fait que l'enroulement (42) s'étend sur une zone périphérique partielle du rotor du moteur électrique (40).

7. Dispositif de freinage électromécanique pour véhicule automobile suivant la revendication 6 comportant :
- une alimentation sans collecteur de l'enroulement (42) du rotor par l'intermédiaire d'une ligne d'alimentation flexible.

8. Dispositif de freinage électromécanique pour véhicule automobile suivant l'une des revendications 1 à 7 comportant :
- une excitation côté stator du moteur électrique (40) au moyen d'aimants permanents (51 ; 52).
